# EUROPEAN PATENT APPLICATION

(11) **EP 4 210 005 A1**
(43) Date of publication of application: **12.07.2023**
(21) Application number: 22020029.9
(22) Date of filing: 01.02.2022
(51) Int. Cl.: G06V 20/56

(54) **DETECTION OF A SCOOTER PARKING STATUS THROUGH A DYNAMIC CLASSIFICATION MODEL**

(30) Priority: 07.01.2022 US 202217647385
(71) Applicant: Reby Inc., Walnut, CA 91789 (US)
(72) Inventor: Alarcón Cot, Eduard, 08174 Sant Cugat del Valles, Barcelona (ES); Ferrer Rizo, Álvaro, 28003 Madrid (ES); Llagostera Saltor, Eugeni, 08034 Barcelona (ES); Gómez Torres, Josep, SW5 0AQ London (GB)
(74) Representative: Ivanov, Ivan Nikolov

(57) **Abstract**

An image classification system and method is used to detect the parking status of lightweight vehicles, such as kick scooters. The system and method uses a deep learning model to analyze and classify ambiguous parking states that are likely to be encountered by lightweight vehicles, which are small and light enough to be parked in many different environments.

## Description

### Technical Field

The invention pertains to the field of lightweight vehicles and methods for detecting the parking status of such vehicles in various environments.

### Background

When a rider finishes a ride using a shared lightweight vehicle, such as an electric scooter, a picture of how the vehicle has been parked is usually required. This image is saved on a cloud storage bucket. A customer service team has a platform to classify this picture between different parking states. The number of parking states can be very large. For example, a lightweight vehicle can be visibly parked in a rack in a number of different configurations. Or the lightweight vehicle can be parked on a tree, a pole, a trash bin, a bench, a fence, or other object. Alternatively, this vehicle can be parked without reference to any other object. In some cases, the vehicle may not be visible. For example, the vehicle itself may not be visible even though a vehicle QR code can be seen. Or the image may be entirely unrecognizable or perhaps a random object that is not a vehicle or an expected object such as a rack, pole, bench, and the like.

The costs for improper parking include fines and other penalties. These costs should ideally be allocated according to actual responsibility. A solution is needed with the ability to classify parking status of a vehicle that minimizes human review and achieves accurate results in ambiguous cases. The tools used for such a solution must work effectively with the constraints imposed by the lightweight vehicle platform. For example, the available onboard space, power plant, and processing power are limited for electric and kick scooters because of their relatively small size and reduced weight compared with conventional automobiles and motorcycles.

### Summary

When a driver finishes a ride, a cloud-based service with a trained image classifier model is ready to predict the parking state of the lightweight vehicle. The service is optimized to predict the parking state of lightweight vehicles generally and scooters in particular. Scooters include kick scooters, kick scooters with some form of power assistance, and fully electric scooters. The invention also applies to future scooter designs that employ a lightweight platform similar to conventional scooters. Results of image classification are saved so that the accuracy of these classifications can be measured, tested, and used to improve the accuracy of future classifications.

The invention solves a problem encountered specifically by lightweight vehicles. Unlike automobiles and motorcycles, lightweight vehicles can be parked virtually anywhere.

In an embodiment, the method of detecting lightweight vehicle parking status comprises training a dynamic classification model using multiple parked scooter training images, where each of the parked scooter training images is associated with a known parking status. Training images and associated known parking status are input into a dynamic classification model as training data to generate a lightweight vehicle parking state classification rule through the dynamic classification model based on the training data.

In an embodiment, training images may contain at least one image of every scooter parking state. The images to be classified may include an image of at least one lightweight vehicle. The parking state classification rules may comprise Logistic Regression, K-Nearest Neighbor, Support Vector Machine, Random Forest, Neural Networks, or a combination of one or more of these rules.

### Summary of Figures

Figure 1 shows an exemplary interaction between a driver's mobile device and an embodiment of the cloud-based service for classifying parking states.
Figure 2 shows a system for classifying and detecting parking states for lightweight vehicles.
Figure 3 shows a method for classifying and detecting parking states, including feedback to the driver of a lightweight vehicle.
Figure 4 shows a view of a lightweight vehicle parked at a first rack.
Figure 5 shows a view of a lightweight vehicle parked at a second rack.
Figure 6 shows a view of a lightweight vehicle parked at a third rack.
Figure 7 shows a view of a lightweight vehicle parked at a fourth rack, one that differs from the first, second, and third racks.
Figure 8 shows a lightweight vehicle parked by a tree.
Figure 9 shows a lightweight vehicle parked near a trash can.
Figure 10 shows a lightweight vehicle parked by a fence or similar structure that is not a wall.
Figure 11 shows a lightweight vehicle parked by a bench.
Figure 12 shows a lightweight vehicle parked by a pole.
Figure 13 shows a lightweight vehicle parked alone or against a wall.
Figure 14 shows a lightweight vehicle in none of the parking states shown in Figures 4-11. This category may also include an image where the parking place or the lightweight vehicle is not clearly shown.
Figure 15 shows an image where a lightweight vehicle is not visible and the image cannot be described with reference to any recognizable structure. For example, the image may be blurry, all black, or simply shows nothing.
Figure 16 shows an image with no lightweight vehicle, but with a random, but recognizable place, and with no lightweight vehicle in the picture.

### Detailed description

The solution comprises a series of steps. In an exemplary embodiment, four steps are used.

At the first step, training images are collected. In an embodiment, the collected images arc actual ride finish pictures from users of the lightweight vehicle from any operating city at any location and time of day or night. The ride finish location and its timestamp are included, together with the picture and state.

At the next step, training images are associated with a parking state. For example, in an embodiment, the number of possible parking states is divided into 14 categories:
1. Vehicle Visible: RackV1,
2. Vehicle Visible: RackV2,
3. Vehicle Visible: RackV3,
4. Vehicle Visible: Rack Other,
5. Vehicle Visible: Free,
6. Vehicle Visible: Parked On Tree,
7. Vehicle Visible: Parked On Pole,
8. Vehicle Visible: Parked On Trash,
9. Vehicle Visible: Parked On Bench,
10. Vehicle Visible: Parked On Fence,
11. Vehicle Visible: Other,
12. Vehicle Not Visible: QR,
13. Vehicle Not Visible: Unrecognizable,
14. Vehicle Not Visible: Random

As the third step, a deep learning model is trained to detect a scooter in the collected images. In an embodiment where the 14 categories listed above are used, a first model is trained with images of three not-visible categories, for example, not visible QR (12), not visible Unrecognizable (13), and not visible Random (14), along with a mix of visible pictures (1-11).

At the fourth step, a deep learning model is trained to detect where the scooter is parked. The first model is trained with images of 11 classes where scooters are visible. Both models are trained using pictures, which may be from the same or different cities. The training includes data augmentation and brightness, contrast, rotation, size, and other image parameters that are modified to increase the model's robustness. Once the model is trained, it is employed to predict a given ride's finish picture state.

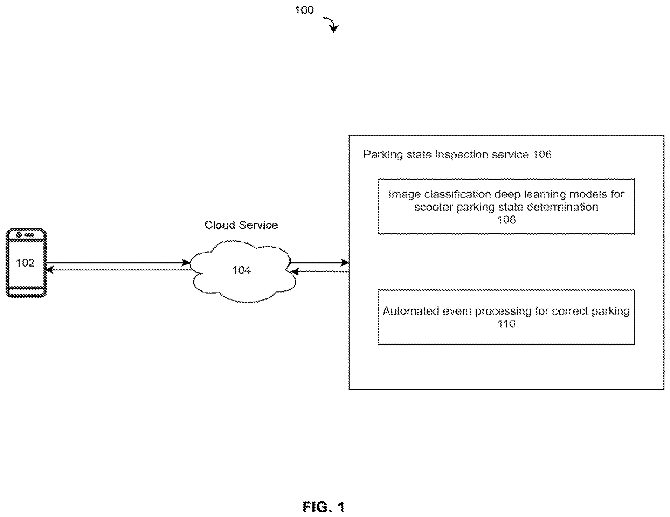

Figure 1 shows a system 100 with exemplary interactions between a driver's mobile device 102 and an embodiment of cloud-based service 104 for classifying parking states. In communication with cloud-based service 104 is parking state inspection service 106. This service comprises image classification deep learning models 108 for scooter parking state determination and automated event processing 110 for correct parking. Two-communication exists between mobile device 102 and cloud-based service 104. There is also two-way communication between cloud-based service 104 and parking state inspection service 106.

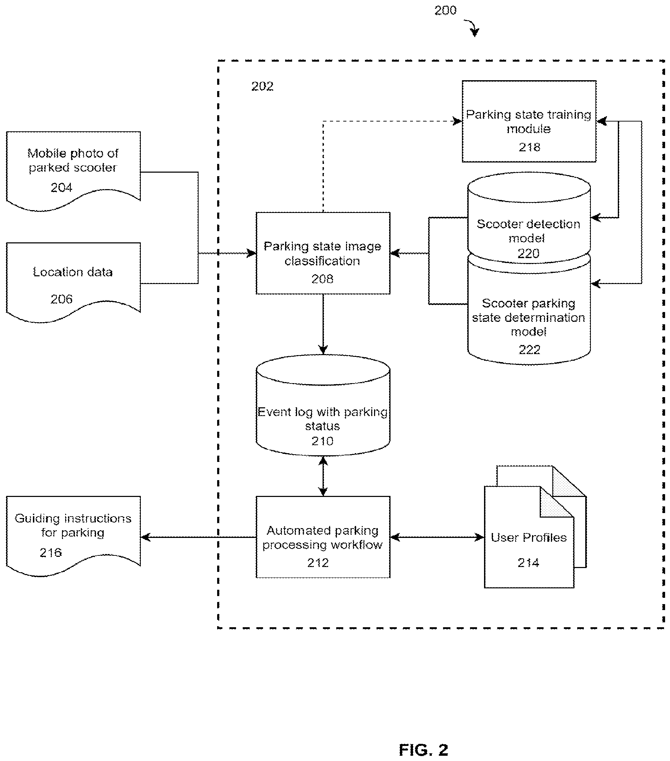

Figure 2 shows details of a system 200 for classifying and detecting parking states for lightweight vehicles. The system comprises a collection 202 of connected components configured to receive a mobile photo 204 of a parked vehicle, such as a scooter. Location data 206 is sent with mobile photo 204 to parking state image classification unit 208. The output of parking state image classifications is communicated to event log with parking status 210. This event log communicates with automated parking processing workflow 212. This workflow 212 queries and receives user profiles from saved user profiles 214, which correspond to scooter users. The output of workflow 212 is a set of guided instructions for parking 216.

Parking state image classification 208 also sends its output to parking state training module 218. This module 218 communicates with a database comprising scooter detection model 220 and scooter parking state determination model 222. The output of scooter detection model 220 and parking state determination model 22 is further communicated to parking state image classification unit 208 and used to generate image classifications.

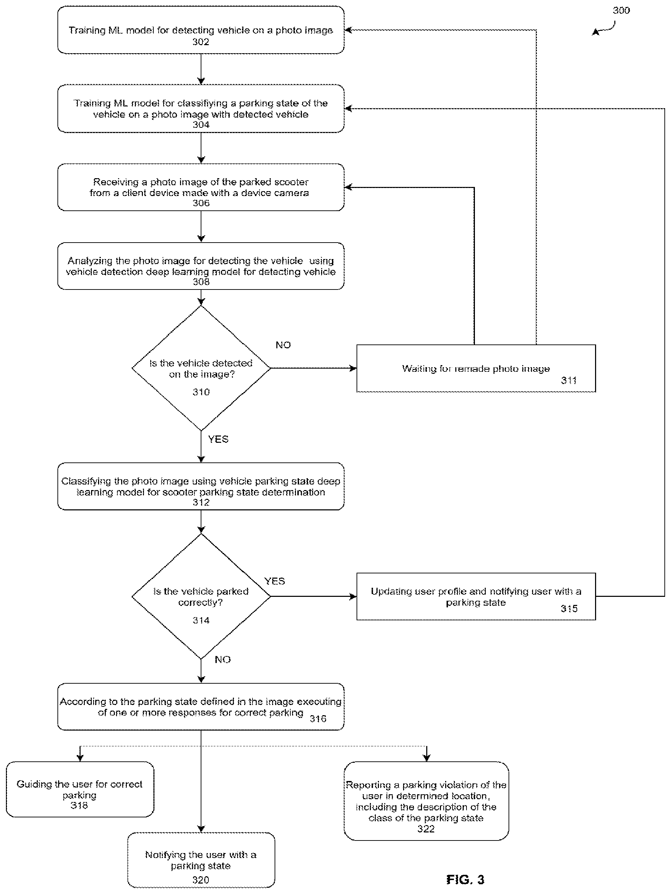

Figure 3 shows a method 300 for classifying and detecting parking states, including feedback to the driver of lightweight vehicles, such as scooters. This method 300 is used with systems such those shown in Figures 1 and 2. At block 302, the step of training a machine learning model for detecting vehicles in a photo image is performed. Then at block 304 follows the step of training a machine learning model for classifying a parking state of the vehicle in a photo image with a detected vehicle. At the following block 306, a photo image of the parked scooter is received from a client device made with a device camera. In this context, the client is a scooter user and the device camera refers to this client scooter user's mobile device. This photo image is analyzed for detection of vehicles using a vehicle detection deep learning model at block 308.

The analysis for the image results in a decision about whether a vehicle is detected at block 310. If no vehicle is detected at block 310, then at block 311 a remade photo image is expected from blocks 306 or 302. If a vehicle is detected at block 310, then the photo image is classified using vehicle parking state deep learning model scooter parking state determination at block 312. Then at block 314 a decision is made whether the vehicle is parked correctly. If yes, then the user's profile is updated and the user is notified with a parking state at block 315. If not, according to the parking state defined in the image executing one or more responses for correct parking at block 316. The output of block 316 comprises guiding the user for correct parking at block 318, notifying the user of a parking state 320, and reporting a parking violation of the user in the user's location 322. This notification 322 may further include a description of the class of parking state.

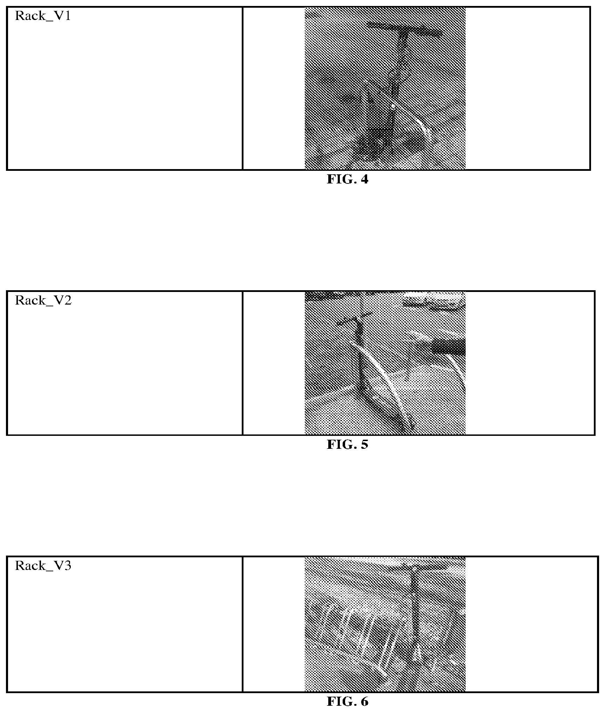

Figures 4-7 show a lightweight vehicle, for example, a scooter, parked in a rack. The scooter may or may not be secured with a locking device as shown. Figure 4 shows a view of a lightweight vehicle parked at a first rack. The first rack is identified in an embodiment as Rack_V1 or similar, to identify a common rack type.

Figure 5 shows a view of a lightweight vehicle parked at a second rack. The second rack is identified as Rack_V2 or similar, to identify a second type of common rack.

Figure 6 shows a view of a lightweight vehicle parked at a third rack. The third rack is identified as Rack_V3 or similar, to identify a third type of common rack.

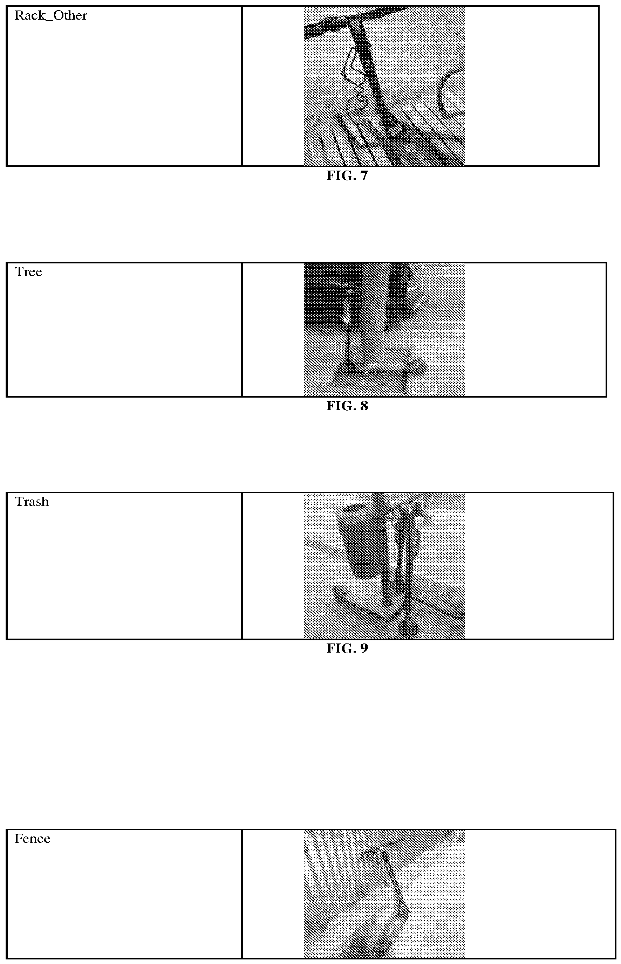

Figure 7 shows a view of a lightweight vehicle parked at a fourth rack, one that differs from the first, second, and third racks. This rack is identified as Rack_Other, to distinguish it from other racks already identified in Figures 4-6. In an embodiment, the rack identified as Rack_Other is less common in a given location than other identified racks.

Figure 8 shows a lightweight vehicle parked by a tree. In an embodiment, the lightweight vehicle is bound to the tree with a locking device.

Figure 9 shows a lightweight vehicle parked near a trash can. The form of the trash can, following local designs, includes a mounting pole that can be used to bind or prop a parked scooter.

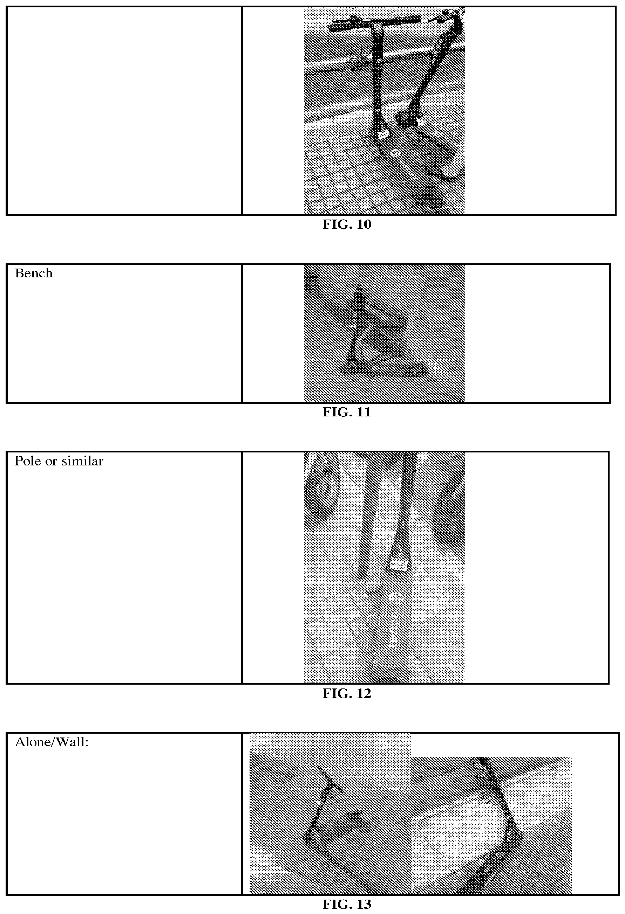

Figure 10 shows a lightweight vehicle parked by a fence or similar structure that is not a wall. The distinction between a fence and a wall lies in part because a fence presents a surface configured for engaging a locking device.

Figure 11 shows a lightweight vehicle parked by a bench. The lightweight device may be bound against the bench or secured with a lock.

Figure 12 shows a lightweight vehicle parked by a pole. As in other parking configurations, a locking device may or may not be used to secure the vehicle.

Figure 13 shows a lightweight vehicle parked alone or against a wall. In these parking states, there is no easily accessible way to bind the vehicle to the wall.

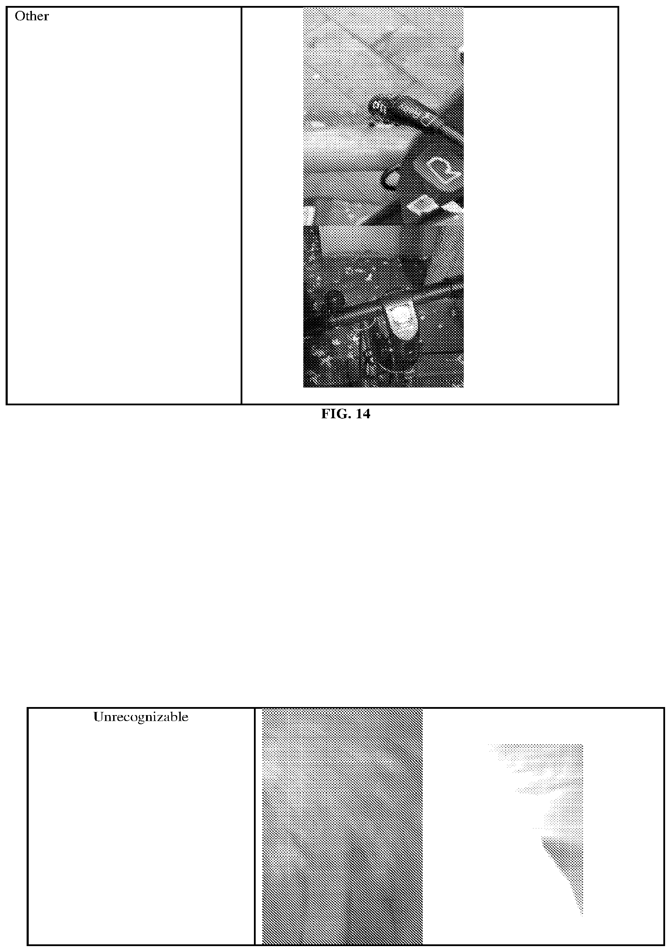

Figure 14 shows a lightweight vehicle in none of the parking states shown in Figures 4-11. This category may also include an image where the parking place or the lightweight vehicle is not clearly shown.

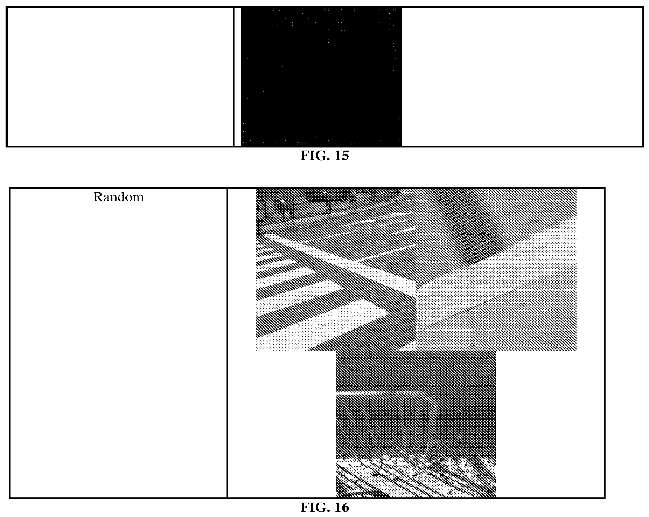

Figure 15 shows an image where a lightweight vehicle is not visible and the image cannot be described with reference to any recognizable structure. For example, the image may be blurry, all black, or simply shows nothing.

Figure 16 shows an image with no lightweight vehicle, but with a random, but recognizable place, with no lightweight vehicle in the picture.

Images, such as those shown in Figures 4-16, are illustrative of images used by the systems of Figures 1 and 2 and the method shown in Figure 3. These images may be examples of test images sent by vehicle users or training images collected to develop a scooter image classification system and method that employs both vehicle detection and parking state detection. For example, images in Figures 14-16 may be used as the basis for requesting further images from a user while images in Figures 4-13 may be used to determine whether a vehicle is parked legally in view of local parking regulations applicable to the lightweight vehicle. If the parking state is determined to be illegal, instructions may be given for re-parking. If the parking is determined to be legal, a confirmation message may be given to the vehicle user.

In an embodiment, images such as those in Figures 15 and 16 where no vehicle is visible are used to train the image classification models. In a further embodiment, classification model training and testing is implemented using TensorFlow or similar software. Appropriate languages comprise Python, C++, and CUDA. The tools used in the systems and methods implementing the invention analyze vehicle detection and parking state sequentially.

The detection of a vehicle, or non-detection of a vehicle--takes place before parking state classification. This sequential processing is adapted to the specific context of lightweight vehicles, such as scooters, which may be parked in a wide variety of locations. Further, the capture of the scooter with a camera is prone to error because of the relatively small size of the vehicle and the increased possibility of inaccurate photo images due to the user's use of a handheld camera in unpredictable environments.

In an embodiment, the reduction of the number of classes that must be distinguished is achieved by training the model in stages. For example, a first model is trained to distinguish high-level details, such as whether the vehicle is visible. The second model, trained to distinguish parking states, will have a lower error rate because it only classifies images that have visible vehicles. For example, details like random or unrecognizable objects or detailed structures such as benches or racks will result in errors if the model must both determine the presence of a vehicle and classify its parking state. A multiple-model system is therefore used to optimize the process. In an exemplary embodiment, the first model's classification task is simplified, such as determining whether a vehicle is visible or not visible and a second model's classification task is more difficult, such as detecting a vehicle's parking state in a wide range of environments.

A multiple-stage process, such as using a first model to determine if a vehicle is in the picture, also results in fast feedback to the user. System resources are optimized and processing times improved when cases where a vehicle is not visible are filtered. This helps the system avoid processing unnecessary pictures with a model that must search and evaluate more classes. Avoiding the processing of unnecessary pictures saves compute resources and results in faster classification.

## Claims

1. A method of controlling a vehicle parking state, comprising:
a. training image classification deep learning models for lightweight vehicle parking state determination, further comprising the steps of:
i. obtaining multiple parked lightweight vehicle training images, wherein each of the parked vehicle training image is associated with a known parking state of the lightweight vehicle;
ii. loading the training images with associated known parking states into a parking state training module as training data;
iii. generating a lightweight vehicle detection deep learning model for detecting the lightweight vehicle based on the training data using the parking state training module; and
iv. generating a lightweight vehicle parking state deep learning model for determining a parking state of the lightweight vehicle using the parking state training module;
and
b. determining a parking state for the parked lightweight vehicle, further comprising the steps of:
i. Receiving an photo image of the parked lightweight vehicle from the client device, wherein the photo image captures the position of the parked vehicle and was made with a client device camera;
ii. Analyzing the photo image using lightweight vehicle detection deep learning model for detecting lightweight vehicle on the photo image; and
iii. Classifying the photo image using lightweight vehicle parking state deep learning model for lightweight vehicle parking state determination;
and
c. Forming an instruction in accordance with determined parking state related to a class of the photo image and verdict of the detection of the lightweight vehicle on the photo image.

2. The method of claim 1, wherein the training images contain at least one image of every lightweight vehicle parking state for each parking state category.

3. The method of claim 1, wherein the image to be classified displays at least one lightweight vehicle.

4. The method of claim 1, wherein the parking state classification rule comprises techniques based in Logistic Regression, K-Nearest Neighbor, Support Vector Machine, Random Forest, Neural Networks, or any combination thereof.

5. A system for sending control indications to a user of a lightweight vehicle over a network, the system comprising:
a processor, connected to the network and configured to receive photo images from drivers of lightweight vehicles;
a parking state training module, configured to load training images with associated known parking states;
a lightweight vehicle detection deep learning model for detecting the lightweight vehicle based on the training data from the parking state training module;
a first photo-analysis module that uses results of the lightweight vehicle detection deep learning model to detect the presence of lightweight vehicles in a received photo image;
a second photo-analysis module that uses results of the lightweight vehicle parking state deep learning model for lightweight vehicle parking state determination; and
a communicator for sending instructions to the user of the lightweight vehicle about the parking state based on the results of the first and second photo-analysis modules.

6. The system of claim 5, wherein the training images contain at least one image of every lightweight vehicle parking state for each parking state category.

7. The system of claim 5, wherein the image to be classified displays at least one lightweight vehicle.

8. The system of claim 5, wherein the second photo-analysis module classifies parking states by way of Logistic Regression, K-Nearest Neighbor, Support Vector Machine, Random Forest, Neural Networks, or any combination thereof.

9. A system for sending control indications to a user of a lightweight vehicle over a network, the system comprising:
a processor, connected to the network and configured to receive images from drivers of lightweight vehicles;
a first image processing module, trained to detect the presence of lightweight vehicles;
a second image processing module, trained to classify the parking state of lightweight vehicles;
a communication module, configured to send messages to the use of the lightweight vehicle;
wherein the first image processing module's training comprises multiple lightweight vehicle images;
wherein the second image processing module's training comprises multiple lightweight vehicle parking states and the second image processing module is configured to classify the parking state of the lightweight vehicle;
and
wherein the communication module is configured to send an indication of the parking state classification to the user of the lightweight vehicle.

10. The system of claim 9, wherein the second image processing module's training images contain at least one image of every lightweight vehicle parking state for each parking state category.

11. The system of claim 9, wherein the first image processing module's training images contain at least one lightweight vehicle.

12. The system of claim 9, wherein the second image processing module classifies parking states by way of Logistic Regression, K-Nearest Neighbor, Support Vector Machine, Random Forest, Neural Networks, or any combination thereof.
